**Europäisches Patentamt**

**European Patent Office**

**Office européen des brevets**

(11) Veröffentlichungsnummer : **0 067 305**
**B1**

(12) **EUROPÄISCHE PATENTSCHRIFT**

(45) Veröffentlichungstag der Patentschrift :
15.03.89

(51) Int. Cl.⁴ : **B 65 D 8/04**, B 29 C 61/02

(21) Anmeldenummer : 82103965.8

(22) Anmeldetag : 07.05.82

(54) **Oben offene, dosenartige Behälter mit Mantel aus Kunststoffolie sowie Verfahren zu deren Herstellung.**

(30) Priorität : 14.05.81 DE 8114318 U
14.05.81 DE 3119257

(43) Veröffentlichungstag der Anmeldung :
22.12.82 Patentblatt 82/51

(45) Bekanntmachung des Hinweises auf die Patenterteilung : 15.03.89 Patentblatt 89/11

(84) Benannte Vertragsstaaten :
AT BE DE GB NL

(56) Entgegenhaltungen :
CH--A-- 527 050
DE--A-- 2 546 590
FR--A-- 2 162 211
FR--A-- 2 202 772
FR--A-- 2 220 430
FR--A-- 2 296 570
FR--A-- 2 340 249
FR--A-- 2 346 138
FR--A-- 2 437 283
GB--A-- 1 365 366
JP--B--35 011 669
JP--B--36 008 319
US--A-- 3 123 273
US--A-- 3 215 325
US--A-- 3 375 954
US--A-- 3 441 192

(73) Patentinhaber : HOECHST AKTIENGESELLSCHAFT
Postfach 80 03 20
D-6230 Frankfurt am Main 80 (DE)

(72) Erfinder : Ziegler, Alfred
Schiersteiner Strasse 121
D-6229 Martinsthal (DE)
Erfinder : Bingemann, Wilhelm
Lohmühlweg 19
D-6200 Wiesbaden (DE)

Jouve, 18, rue St-Denis, 75001 Paris, France

# Beschreibung

Die Erfindung betrifft einen oben offenen, dosenartig ausgebildeten Behälter mit planem Boden, bei dem der Behältermantel aus sich in Wärme geschrumpftem Zustand befindlicher thermoplastischer Kunststoffolie ein oberes Teil, dessen Querschnittsfläche über die gesamte Länge des Teils gleichbleibende Form und Abmessung besitzt, sowie ein unteres konisches Teil mit verjüngtem Ende bildet, bei dem der Mantel eine mantelumfängliche Kante besitzt, im Bereich derer die beiden Teile des Behältermantels aneinandergrenzen, und bei dem am verjüngten Ende des konischen Mantelteils ein umlaufender, nach innen ragender planer Kragen angeordnet ist.

Der Behälter kann in vorteilhafter Ausgestaltung einen Deckel besitzen.

Die Erfindung betrifft ferner Verfahren zur Herstellung des bezeichneten Behälters.

Es sind dosenartige, oben offene Behälter bekannt, deren Mäntel aus rechteckigen Folienzuschnitten gebildet sind. Bei den bekannten Behältern sind die Behältermäntel über ihre gesamte Länge rohrförmig ; sie sind demnach nicht unter Bildung eines Behälterstapels ineinandersteckbar.

Bei bekannten, unter Bildung eines Behälterstapels ineinandersteckbaren Behältern, bestehen deren Mäntel aus Folienzuschnitten, deren Form der Abwicklung eines Pyramidenstumpfes entspricht ; ihr Boden besteht aus einem schalenähnlich ausgebildeten Formteil, bei dem der Schalenrand mit dem Behältermantel verbunden ist.

Die bekannten ineinandersteckbaren Behälter haben ausschließlich kreisförmigen Querschnitt mit sich vom Anfang des Behältermantels bis zu seinem Ende stetig änderndem Durchmesser ; dies führt dazu, daß Mäntel von Behältern mit relativ großem Hohlraum unbefriedigende Querschnittsformstabilität haben. Die Mäntel der bekannten Behälter umfassen keine diesen Formstabilität verleihenden Kanten.

Die gattungsbildende DE-A-25 46 590 beschreibt bereits einen Behälter mit einer mantelumfänglichen Kante, die ein oberes querschnittkonstantes von einem unteren konischen Mantelteil trennt. Die DE-A- beschreibt auch die Herstellung des betreffenden Behälters durch Aufschrumpfen einer thermoplastischen Kunststoffolie auf einen Dorn. Der Hauptnachteil des bekannten Behälters ist jedoch darin zu sehen, daß ein Stapeln mehrerer Behälter aufeinander nicht möglich ist. Ferner bestehen die bekannten Behälter aus einem Material, das, um die notwendigen Wärmeschrumpfeigenschaften zu gewährleisten, eine sog. Zellstruktur besitzt, wobei die Zellen so ausgebildet sind, daß sie sich unter Wärmeeinwirkung zusammenziehen. Nachteiligerweise besitzen solche Materialien mit Zellstruktur aber infolge der Lichtstreuung durch die Zellen ein opakes Aussehen, sind also nicht transparent durchsichtig.

Der Erfindung liegt die Aufgabe zugrunde, dosenartige ausgebildete, oben offene Behälter vorzuschlagen, die infolge ihrer baulichen Ausbildung zu Behälterstapeln ineinandersteckbar sind, wobei deren Mäntel aus transparenter thermoplastischer Kunststoffolie bestehen, die auch dann befriedigende Querschnittsformstabilität besitzen, wenn die Behälterhohlräume relativ großvolumig sind und bei denen Behälterhohlraummündungsflächen sowohl kreisförmige als auch rechteckige Form haben können. Der Erfindung liegt weiterhin die Aufgabe zugrunde, ein Verfahren zur Herstellung der bezeichneten Behälter vorzuschlagen, bei dem zur Herstellung des Behälterbodens ein planes Flächengebilde verwendet wird.

Die der Erfindung zugrundeliegende Aufgabe wird gelöst durch einen gattungsgemäßen Behälter, dessen kennzeichnende Merkmale darin zu sehen sind, daß an der Außenseite des Kragens ein planer flächenhafter Werkstoffzuschnitt befestigt ist, der den Behälterboden bildet, daß die Länge des rohrförmigen Teils gering ist im Vergleich zu der Gesamtlänge des Behältermantels, damit Behälter gleicher Abmessungen unter Bildung von Behälterstapeln ineinandersteckbar sind, und daß der Mantel aus weichmacherfreier, transparenter Polyvinylchloridfolie besteht.

Figur 1 zeigt einen senkrechten Schnitt durch einen erfindungsgemäßen Behälter in einfachster Ausführungsform in seitlicher Ansicht.

Figur 2 zeigt einen senkrechten Schnitt durch einen erfindungsgemäßen Behälter, dessen Mantel im unteren konischen Teil eine zweite umfängliche Kante aufweist, in seitlicher Ansicht.

Der erfindungsgemäße dosenartig ausgebildete, oben offene Behälter ist aus einem individuellen Behältermantel und einem mit diesem verbundenen, individuellen, flächigen, planen Bodenteil aufgebaut, gemeinsam begrenzen sie den zur Füllgutaufnahme vorgesehenen Behälterhohlraum.

Der Behältermantel ist einstückig ausgebildet, er besitzt eine gerade Mittellängsachse, die mit dem planen, flächigen Behälterboden einen rechten Winkel bildet. Der Behältermantel besteht aus einem oberen rohrförmigen Teil, dessen Querschnittsfläche über die gesamte Länge des Teils gleichbleibende Form und Abmessung besitzt und einem unteren konischen Teil, das sich in Richtung auf sein dem rohrförmigen Teil abgewandten Ende hin und bis zu diesem verjüngt. Die beiden bezeichneten Teile des Behältermantel grenzen im Bereich einer gemeinsamen Kante unmittelbar aneinander.

Das eine — obere — Ende des Behälters bzw. des Behältermantels wird durch den die Behälterhohlraummündungsöffnung umgrenzenden Rand des oberen rohrförmigen Mantelteils und das andere — untere — durch das verjüngte Ende des unteren konischen Mantelteils gebildet.

Der Behältermantel besitzt eine sich von seinem einen bis zum anderen Ende erstreckende schmale, streifenförmige Überlappungszone, im Bereich derer die aus thermoplastischer Kunststoffolie bestehende Wandung des Behältermantels doppellagig ausgebildet ist. Die schmale streifenförmige Überlappungszone verläuft dabei derart am Behältermantel, daß durch ihre Mittellängsachse und die Behältermittellängsachse eine gemeinsame Ebene legbar ist.

Die bezeichnete Kante, im Bereich derer die beiden bezeichneten Mantelteile aneinandergrenzen, umläuft den gesamten Mantelumfang entlang einer ringförmig in sich geschlossenen Linie, wobei diese sich in einer Ebene erstreckt, zu der die gerade Mantellängsachse einen rechten Winkel bildet. Die bezeichnete mantelumfängliche Kante besitzt eine nach außen konvex gewölbte Oberfläche. Das obere rohrförmige Teil des Behältermantels ist schmal, d. h. seine Höhe ist gering im Vergleich zur Gesamthöhe des Behältermantels.

Die ringförmige Linie, entlang derer die bezeichnete mantelumfängliche Kante verläuft, entspricht vorteilhaft in ihrer Form einem Kreisring oder sie ist so ausgebildet, daß sie eine quadratische Fläche umgrenzt; dabei verläuft die Mantelmittellängsachse durch den Mittelpunkt der Kreisfläche bzw. der quadratischen Fläche.

Bevorzugt ist der Durchmesser des Behältermantels am verjüngten Ende seines unteren konischen Teils bis zu 25 %, insbesondere bevorzugt 10 %, kleiner als der Durchmesser des oberen rohrförmigen Mantelteils.

Vorteilhaft entsprechen sich die Querschnittsflächen beider Mantelteile in ihrer Form; sie können bspw. beide rechteckige, bevorzugt quadratische, Querschnitte besitzen oder auch beide Querschnittsflächen haben, die jeweils durch Kreislinien begrenzt sind. Im Übergangsbereich beider Mantelteile haben die Querschnitte beider Teile jeweils gleiche Abmessung.

Der Behältermantel kann jedoch auch derart ausgebildet sein, daß sein oberer rohrförmiger Teil kreisförmig begrenzte Querschnittsfläche hat, sein unterer konischer Teil eine Querschnittsfläche besitzt, die nicht kreisförmig begrenzt ist, sondern die bspw. rechteckige Form hat.

Erfindungsgemäße Behälter haben vorteilhaft eine Gesamthöhe von bspw. 5 bis 35 cm.

Der Durchmesser des rohrförmigen Mantelteils beträgt bspw. 50 bis 250 mm, vorteilhaft bspw. 80 bis 200 mm. Der Durchmesser des Mantelteils am verjüngten Ende seines konischen Teils beträgt bspw. 45 bis 235 mm, vorteilhaft 75 bis 190 mm.

Bei einer Gesamthöhe des Behältermantels von bspw. 100 mm hat sein oberes rohrförmiges Teil eine Höhe von bspw. 20 mm. Die Gesamthöhe des Behälters entspricht der Gesamtlänge seiner geraden Mittellängsachse.

Der Behältermantel hat am verjüngten Ende seines unteren konischen Teils einen integralen, nach innen ragenden, umlaufenden, ringscheibenförmig ausgebildeten planen Kragen, dessen Breite vorteilhaft 5 bis 7 mm ist; der Kragen ist über seine gesamte Umfangslänge gleichbreit. Der behältermantelintegrale Kragen erstreckt sich in einer Ebene, mit der die Mittellängsachse des Mantels einen rechten Winkel bildet. Der Kragenumfangsrand umgrenzt dabei eine Fläche, durch deren Mittelpunkt die Mittellängsachse des Behältermantels verläuft. Der Kragenumfangsrand umgrenzt die untere Öffnung des Behältermantels. Der plane Behälterboden ist an der Außenseite des Behältermantelkragens befestigt, er verschließt die untere Öffnung dos Behältermantels.

Die Dicke der den Behältermantel bildenden thermoplastischen Kunststoffolie beträgt vorteilhaft ca. 300 μm; der Behälterboden hat vorteilhaft eine Dicke von 350 μm.

Der plane Boden des Behälters wird durch einen flächenhaften planen Werkstoffzuschnitt gebildet, der in Form und Abmessung der Querschnittsfläche am verjüngten Ende des konischen Behälterteils angepaßt ist.

Der Behälterboden ist derart mit der Außenseite des planen behältermantelintegralen Kragens befestigt, daß er die vom Umfangsrand des Kragens umgrenzte Öffnung des Behältermantels be- bzw. überdeckt. Die Befestigung des planen Bodens am Behältermantel kann bspw. durch Verklebung oder Versiegelung oder durch Heftung erfolgen.

Der Behälterboden besteht vorteilhaft aus thermoplastischer Kunststoffolie, insbesondere vorteilhaft aus solcher, die sich durch Siegelung mit dem Kragen des Behältermantels verbinden läßt, ganz besonders bevorzugt besteht er aus thermoplastischer Kunststoffolie, die in ihrem chemischen Aufbau dem entspricht, aus welcher der Behältermantelkragen besteht. Der Behälterboden kann jedoch auch aus Aluminiumfolie oder aus Pappe bestehen, sofern derartige Böden durch Versiegelung mit dem Kragen des Behältermantels verbunden sind, besitzt die Pappe bzw. die Aluminiumfolie eine siegelfähige Schicht.

Bei einer besonderen Ausführungsform der gegenständlichen Erfindung hat der Behältermantel mit integralem Kragen am verjüngten Ende seines konischen Teils insgesamt zwei mantelumfängliche Kanten mit jeweils konvex gewölbten Außenseiten, wobei die eine — erste — Kante wie vorstehend angegeben, den Übergang zwischen rohrförmigem und konischen Mantelteil markiert und wie vorstehend angegeben verläuft und die andere — zweite — Kante parallel und im Abstand zur ersten so wie nahe dem verjüngten Ende des unteren, konischen Mantelteils verläuft. Der Abstand der bezeichneten zweiten mantelumfänglichen Kante im konischen Mantelteil vom verjüngten Ende desselben ist viel geringer als der Abstand der beiden parallel zueinander verlaufenden mantelumfänglichen Kanten voneinander. Der Abstand der bezeichneten zweiten mantelumfänglichen Kante vom verjüngten Ende des konischen Mantelteils beträgt bspw. 30 mm.

In der angegebenen besonderen Ausführungsform des Behälters umfaßt das konische Teil des Behältermantels demnach zwei Zonen jeweils unterschiedlicher Konizität; die Zone größerer Konizität ist dabei diejenige, die sich zwischen der bezeichneten zweiten mantelumfänglichen Kante und dem verjüngten Ende des konischen Mantelteils erstreckt, sie wird auch als « Anphasungszone » des konischen Mantelteils bezeichnet.

Die vorstehend konkretisierte besondere Ausführungsform des Behältermantels ist insbesondere dann vorteilhaft, wenn das rohrförmige Teil des Behältermantels hoch im Verhältnis zur Gesamthöhe des Mantels ist, weil dann die Anphasung am konischen Teil des Behältermantels das Entstapeln derart ausgebildeter ineinandergesteckter Behälter erleichtert.

Sowohl die bezeichneten umfänglichen Kanten am Behältermantel als auch der Kragen desselben bilden jeweils Elemente, die zur Querschnittsformstabilität des Mantels bzw. des Behälters beitragen.

Der Behältermantel mit integralem Kragen besteht aus einem Stück sich in Wärme geschrumpftem Zustand befindlicher thermoplastischer Polyvinylchloridfolie. Die Folie ist weichmacherfrei und transparent.

Unter der Bezeichnung « Mantel aus in Wärme geschrumpftem Zustand befindlichem Folienstück » soll definitionsgemäß verstanden werden, daß die den Mantel bildende thermoplastische Kunststoffolie einen physikalischen Status besitzt, der sich einstellt, wenn man eine ursprünglich biaxial streckorientierte thermoplastische Kunststoffolie der Einwirkung von Wärme derart unterwirft, daß ihre herstellungsbedingt inhärente latente Schrumpffähigkeit (latente Schrumpfspannung) ausgelöst wird, wobei infolge Schrumpfung Dimensionsverkürzung der Folie eintritt.

Die Erfindung betrifft ferner Verfahren zur Herstellung der erfindungsgemäßen Behälter.

Es ist bekannt, oben offene dosenartige Behälter, die infolge der insgesamt konischen Form ihrer Mäntel unter Bildung eines Behälterstapels ineinandersteckbar sind, dadurch herzustellen, daß man aus einer Folienbahn einen Zuschnitt ausstanzt oder ausschneidet, der in seiner Form der Abwicklung eines Kegelstumpfes entspricht ; der Zuschnitt wird dann derart zu einem konischen Hohlkörper geformt, daß man seine den kürzeren Zuschnittskanten nahen Bereiche in überlappende Anordnung bringt, wobei die bezeichneten Kanten parallel zueinander verlaufen. Die überlappenden Teile des Zuschnitts werden dann durch Verklebung miteinander verbunden. Danach wird ein Bodenteil in Form einer Schale mit flachem Umfangsrand derart am Mantel befestigt, daß die Oberfläche des flachen Schalenumfangsrandes mit der Oberfläche des Mantels im Bereich seines verjüngten Endes aneinandergrenzen. Verbindung beider Teile erfolgt durch Verklebung.

Das bekannte Verfahren zur Herstellung oben offener Behälter mit konischem Mantel aus Kunststoffolie ist aufwendig, weil das Folienstück, das den Mantel bildet, eine relativ komplizierte Form — nämlich die Abwicklung eines Kegelstumpfes — besitzt. Der Zuschnitt muß aus einer Folienbahn ausgestanzt oder ausgeschnitten werden. Durch diese Herstellungsweite fällt zwangsläufig erheblicher Folienabfall an.

Außerdem ist es nach dem bekannten Verfahren erforderlich, den Behälterboden als schalenähnliches Formteil auszubilden, da es nicht möglich ist, am Behältermantel als Boden des Behälters ein planes Flächengebilde zu befestigen.

Die Herstellung des Behälterbodens und seine Befestigung am Behältermantel bedingen erheblichen Arbeitsaufwand und besondere Sorgfalt bei der Herstellung des Behälters.

Der Erfindung liegt demnach die Aufgabe zugrunde, Verfahren vorzuschlagen, mit denen es in einfacher Weise möglich ist, dosenartige, oben offene Behälter herzustellen, die infolge ihrer Ausbildung unter Bildung von Behälterstapeln ineinandersteckbar sind, die befriedigende Querschnittsformstabilität besitzen und bei denen der Behälterboden ein planes flächenhaftes Werkstück ist, das sich in einfacher Weise am Behältermantel befestigen läßt.

Diese der Erfindung zugrundeliegende Aufgabe wird durch die angegebene Verfahrensweise gelöst, bei der man

i) aus einer Bahn aus biaxial streckorientierter, wärmeschrumpffähiger, thermoplastischer Kunststoffolie durch Falten derselben ein Rohr mit längsaxialer Überlappungsnaht bildet ;

ii) von diesem ein Stück vorbestimmter Länge abschneidet und es auf einen formfesten Dorn mit gerader Mittellängsachse aus einem ersten Teil, bei dem Form und Abmessung seiner Querschnittsfläche über seine gesamte Höhe gleichbleibend ist, und einem sich an dieses unmittelbar anschließenden zweiten konischen Teil, dessen verjüngtes Ende mit planer Stirnfläche dem ersten Teil abgewandt ist, wobei die Länge des ersten, in seiner Querschnittsfläche gleichbleibenden Teils klein ist im Verhältnis zur Gesamtlänge des ersten und zweiten Teils, derart aufschiebt, daß das Rohrstück, das länger als der Dorn ist, mit einem Ende über die plane Stirnfläche am verjüngten Ende des konischen Dornteils hinausragt ;

iii) das Rohstück mit Wärme beaufschlagt und dadurch auf den Dorn aufschrumpft ;

iv) den auf die Stirnfläche des konischen Dornteils teilweise beigeschrumpften Rohrstücküberstand in noch warmformbarem Zustand an diese anpreßt ;

v) das derart gebildete Hohlkörperformteil abkühlt und vom Dorn abnimmt ;

vi) und dann an der Außenseite des Hohlkörperformteilkragens ein planer Werkstoffzuschnitt als Behälterboden befestigt wird.

Die Herstellung erfindungsgemäßer Behälter wird nachfolgend beispielhaft noch näher erläutert.

Ausgangsmaterial für das Herstellungsverfahren ist eine herstellungsbedingt biaxial streckorientierte weichmacherfreie Folie aus Polyvinylchlorid. Der streckorientierte Status der Folie findet an dieser darin seinen Ausdruck, daß sie nach Erwärmung auf eine Temperatur im Bereich von 130°C bis 140°C infolge dabei eintretender Schrumpfung ihre Länge in Maschinenrichtung um 1 bis 5 %, bezogen auf ihre Ausgangslänge,

verringert und zugleich ihre Breite bis zu 40 %, bezogen auf ihre Ausgangsbreite, verkürzt.

Die verwendete Folie ist weichmacherfrei sowie transparent.

Die Ausgangsfolie hat vorteilhaft eine Dicke im Bereich von 150 bis 400 µm, ganz bevorzugt eine Dicke von 250 bis 350 µm.

Aus einer Bahn aus bezeichneter Folie wird durch fortlaufendes längsaxiales Falten derart, daß die Bahnseitenränder parallel zueinander verlaufend überlappen, ein Rohr mit kreisförmigem Querschnitt gebildet ; die sich überlappenden Folienbereiche des Rohres werden durch Verklebung mittels geeigneter Klebemittel miteinander verbunden. Die Herstellung eines Rohres aus einer Folienbahn durch überlappendes Falten derselben und Verklebung der Bahn im Überlappungsbereich ist bekannt, desgleichen die dazu geeigneten Vorrichtungen.

Von dem hergestellten Rohr aus bezeichneter Kunststofffolie werden jeweils Stücke vorbestimmter Länge abgeschnitten.

Die Rohrstücke sind durch latente Wärmeschrumpffähigkeit ausgezeichnet, sie sind dadurch charakterisiert, daß sie bei Erwärmung auf eine Temperatur im Bereich von 130 bis 140°C infolge dabei eintretender Schrumpfung ihren Durchmesser bis zu 40 %, bezogen auf den Ausgangsdurchmesser, verringern und zugleich ihre Länge um 1 bis 5 %, bezogen auf die Ausgangslänge der Rohrstücke, verkürzen. Rohrstücke aus den bezeichneten Folien, die die angegebenen Schrumpfeigenschaften besitzen, werden als bei Wärmeeinwirkung sich selbst verformende Rohrstücke bezeichnet.

Zur Herstellung des Mantels eines erfindungsgemäßen Behälters aus einem sich unter Wärmeeinwirkung selbst verformenden Rohrstückes aus bezeichneter Kunststoffolie wird dieses auf einen formfesten Dorn mit gerader Mittellängsachse aufgeschoben, dessen Oberfläche besonders profiliert ausgebildet ist. Der Dorn besteht bspw. aus Metall.

Der formfeste Dorn mit gerade Mittellängsachse besteht aus einem ersten und aus einem zweiten Teil. Die Form des ersten Teils ist dadurch charakterisiert, daß seine Querschnittsfläche über die gesamte Höhe des Teils gleichbleibende Form und Abmessung besitzt. Die Querschnittsfläche kann bspw. durch eine Kreislinie begrenzt sein, sie kann jedoch auch rechteckige oder quadratische Form haben. Das zweite Dornteil ist konisch ausgebildet ; sein verjüngtes Ende ist dem ersten Dornteil abgewandt. Beide Dornteile gehen im Bereich ihrer gemeinsamen dornumfänglichen Kante unmittelbar ineinander über. Die dornumfängliche Kante verläuft entlang einer in sich geschlossen ausgebildeten Linie, die sich in einer Ebene erstreckt, mit der die gerade Dornlängsmittelachse einen rechten Winkel bildet.

Die Stirnseite des verjüngten Endes des konischen Dornteils wird durch eine plane Stirnfläche gebildet, zu der die gerade Dornmittellängsachse im rechten Winkel verläuft.

Bevorzugt ist die der einen bezeichneten Stirnfläche gegenüberliegende andere Stirnfläche des Dornes ebenfalls plan und bildet ebenfalls mit der Dornmittelachse einen rechten Winkel.

Die Höhe des ersten rohrförmigen Dornteils ist vorteilhaft gering im Vergleich zur Gesamthöhe des Dornes, die durch die Gesamthöhe der Dornmittellängsachse bestimmt ist. Bei einer Gesamthöhe des Dornes von bspw. 100 mm beträgt die Höhe des rohrförmigen ersten Dornteils bspw. 20 mm.

Bei der Verfahrensdurchführung wird der Dorn als Formwerkzeug (Widerlagerelement) verwendet, das auf den Dorn aufgeschobene Rohrstück mit den angegebenen Eigenschaften schrumpft bei Wärmebeaufschlagung auf die profilierte Oberfläche des Formwerkzeuges auf und wird dadurch in einen diesem entsprechend profiliert ausgebildeten Formhohlkörper aus Kunststoffolie umgewandelt. Infolge der angegebenen besonderen baulichen Ausbildung des Dornes, d. h. infolge seiner besonderen Kontur, erhält das mit seiner Hilfe wie angegeben herstellbare bzw. hergestellte Hohlkörperformteil eine Raumform, die der des Mantels des erfindungsgemäßen Behälters entspricht.

Der Dorn ist vorteilhaft auf einer planen formstabilen Standplatte derart befestigt, daß seine gerade Mittellängsachse einen rechten Winkel mit der Standplatte bildet und die plane Stirnfläche dem verjüngten Ende des konischen Dornteils der Standplatte abgewandt ist. Die andere Stirnfläche des Dorns grenzt unmittelbar an die Oberfläche der Standplatte an.

Der Dorn ist vorteilhaft temperierbar ausgebildet ; man geht dabei von einem Hohldorn aus, an der der Standplatte zugewandten Stirnseite des Dorns befinden sich jeweils eine Öffnung zur Einleitung von temperierter Flüssigkeit in den Dornhohlraum und eine Öffnung zur Ableitung derselben aus diesem. Die bezeichneten Öffnungen sind jeweils mit Rohrstücken verbunden, die durch die Standplatte nach außen verlaufen.

Als Temperierflüssigkeit wird bspw. warmes Wasser verwendet, das ständig durch den Hohlraum des Dornes gepumpt wird.

Die plane formstabile Standplatte des Dornes ist bspw. quadratisch und so bemessen, daß sie allseitig über den Umfangsrand des unmittelbar an sie angrenzenden rohrförmigen Dornteils hinausragt.

Das Rohrstück aus biaxial streckorientierter Kunststoffolie mit der angegebenen latenten Wärmeschrumpffähigkeit wird dann auf den Dorn auf- und derart über diesen geschoben, daß dabei das verjüngte Ende des konischen Dornteils zuerst in den Hohlraum des Rohrstücks eindringt ; das Rohrstück wird dabei so weit über den Dorn geschoben, daß sein der Dornstandplatte zugewandter Umfangsrand unmittelbar an diese angrenzt, d. h. so weit, bis das Rohrstück mit seinem einen Umfangsrand auf der Oberfläche der Dornstandplatte aufsteht.

Die Länge des Rohrstücks wird dabei derart bemessen, daß sie um soviel größer ist als die Länge der geraden Mittellängsachse des Dorns, daß der der Dornstandplatte abgewandte Rohrstückumfangsrand nach Aufschieben des Rohrstückes auf den Dorn sich in einer Ebene erstreckt, die parallel-abständig zur und oberhalb der planen Stirnfläche am verjüngten Ende des konischen Dornteils verläuft. Vorteilhaft ist die Länge des Rohrstücks derart bemessen, daß der Überstand des Rohrstückes, der über die Ebene der Dornstirnfläche am konischen Ende des Dornteils hinausragt, eine Höhe von bspw. 1 cm hat.

Das verwendete Rohrstück hat einen Innendurchmesser, der dem Außendurchmesser des rohrförmigen Dornteils derart angepaßt ist, daß es sich über diesen wie angegeben längsaxial schieben läßt, daß das Rohrstück nach erfolgter Schrumpfung infolge Wärmebeaufschlagung dem Dornumfang eng anliegt.

Das wie angegeben auf den Dorn aufgeschobene Rohrstück wird dann über seine gesamte Länge und seinen gesamten Umfang derart wärmebeaufschlagt, daß dabei die dem Rohrstück latent innenwohnende Schrumpfspannung ausgelöst wird, wobei Dimensionsverkürzung des Rohrstückes infolge Schrumpfung desselben eintritt. Man erwärmt das aus streckorientierter weichmacherfreier Folie aus Polyvinylchlorid bestehende Rohrstück auf eine Temperatur im Bereich von 130 bis 140 °C, bspw. auf eine Temperatur von 135 °C. Die Wärmebeaufschlagung kann z. B. mit Infrarotstrahlung erfolgen.

Das Rohrstück schrumpft dabei auf den Dorn auf ; infolge der dabei eintretenden Längenverkürzung unter zugleicher Durchmesserverringerung des Rohrstückes schrumpft dabei dessen Überstand auf die Stirnfläche des konischen Dornteils teilweise auf.

Mit Hilfe eines stempelartig ausgebildeten Werkzeuges wird dann der sich noch in warmformbarem Zustand befindliche auf die Stirnfläche des konischen Dornteils teilweise aufgeschrumpfte Schlauchstücküberstand an diese angepreßt. Man läßt dann den Formhohlkörper aus wärmegeschrumpfter Kunststoffolie so weit abkühlen, daß man ihn ohne Beschädigung seiner Form vom Dorn entfernen kann. Das aus dem Rohrstücküberstand gebildete Element des Hohlkörperformteils bildet einen planen Kragen an diesem. Das vom Dorn abgenommene Hohlkörperformteil entspricht in seiner Raumform der des Behältermantels mit Kragen der gegenständlichen Erfindung ; es ist Zwischenerzeugnis bei der Herstellung des erfindungsgemäßen Behälters.

Aus dem wie angegeben hergestellten Zwischenerzeugnis mit planem Kragen wird ein Behälter dadurch gebildet, daß man an der Außenseite des planen Kragens einen planen Werkstoffzuschnitt befestigt, der in Form und Abmessung dem Mantelquerschnitt am verjüngten Ende des konischen Teils des Zwischenerzeugnisses entspricht. Der plane Werkstoffzuschnitt deckt die durch den Umfangsrand des Kragens begrenzte Öffnung des Zwischenerzeugnisses ab.

Der den Behälterboden bildende plane Werkstoffzuschnitt besteht bspw. aus weichmacherfreier Folie aus Polyvinylchlorid. Die feste Verbindung zwischen dem planen Werkstoffzuschnitt und dem Kragen des Zwischenerzeugnisses wird bspw. durch Verklebung beider bezeichneter Elemente mit Hilfe geeigneter bekannter Klebemittel bewirkt.

Die Außenseite der am Kragen des Zwischenerzeugnisses befestigten Zuschnitts bildet die Behälterstandfläche.

Bei einer zweiten Verfahrensvariante geht man zur Herstellung erfindungsgemäßer Behälter von einem Dorn aus, der sich von dem wie angegeben ausgebildeten Dorn nur dadurch unterscheidet, daß er eine weitere dornumfängliche Kante im Bereich seines konischen Teils besitzt. Die zweite dornumfängliche Kante verläuft dabei in nahem Abstand zum verjüngten Ende des konischen Dornteils, bspw. in einem Abstand von 30 mm von diesem. Die beiden parallel zueinander verlaufenden dornumfänglichen Kanten haben dabei einen Abstand von bspw. 70 mm voneinander.

Durch die zweite dornumfängliche Kante im Bereich des konischen Dornteils wird dieses in zwei Zonen jeweils unterschiedlicher Konizität aufgeteilt, wobei sich die beiden konischen Zonen jeweils in Richtung auf das dem rohrförmigen Dornteil abgewandte Ende des Dorns hin verjüngen. Die an das rohrförmige Dornteil angrenzende Zone des konischen Dornteils hat dabei eine geringere Konizität als die andere konische Zone desselben.

Die zweite dornumfängliche Kante verläuft ebenfalls entlang einer ringförmig in sich geschlossenen Linie, die eine Fläche umgrenzt, deren Form der Querschnittsfläche des konischen Dornteils entspricht.

Im übrigen wird die zweite Verfahrensvariante wie die erste durchgeführt.

Bei bevorzugter Durchführung der Verfahrensvarianten mit beheizbarem Dorn wird die Dornoberfläche auf eine Temperatur von ca. 40 °C gebracht und auf dieser Temperatur gehalten.

Die Temperierung des Dorns erfolgt dadurch, daß man durch den Dornhohlraum fortlaufend Flüssigkeit, bspw. Wasser bei einer Temperatur von ca. 40 °C hindurchführt.

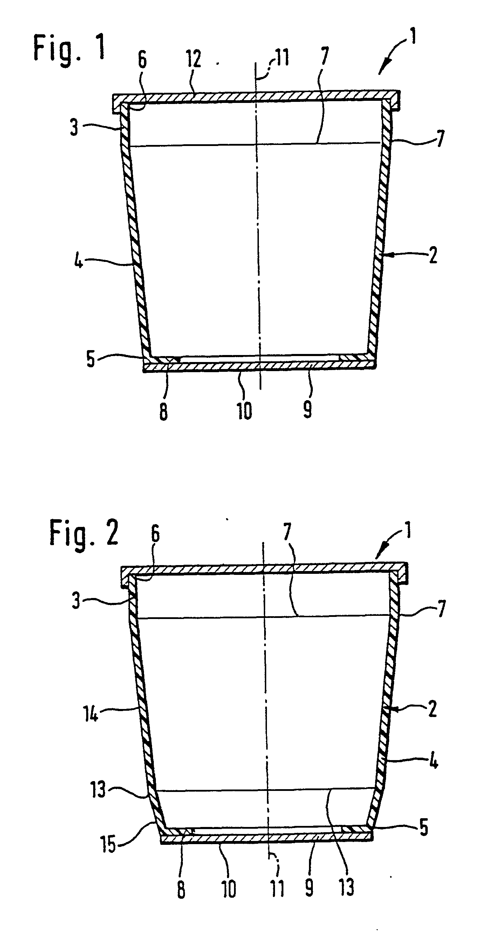

Die Zeichnung soll anhand der Figuren 1 und 2 die gegenständliche Erfindung beispielhaft erläutern. In den Figuren 1 und 2 sind besondere Ausgestaltungen im Querschnitt und in schematischer Darstellung gezeigt.

Die Figur 1 zeigt einen Behälter, dessen Mantel eine umfängliche Kante besitzt, im Bereich derer das rohrförmige Mantelteil in das konische übergeht.

In der Figur 2 ist ein Behälter dargestellt, dessen Mantel zwei umfängliche Kanten besitzt, wobei die zweite mantelumfängliche Kante sich am konischen Teil desselben nahe dessen verjüngtem Ende befindet.

In der Figur 1 bedeutet 1 den Behälter mit Deckel in seiner Gesamtheit, 2 ist der Mantel des Behälters, 3 das obere rohrförmige Mantelteil und 4 das untere konische Mantelteil, 5 ist das verjüngte Ende des konischen Mantelteils 4, 6 ist der Umfangsrand des Mantels, der die Behälterhohlraummündungsöffnung begrenzt, 7 ist eine mantelumfängliche Kante, im Bereich derer das rohrförmige Manteiteil 3 integral in das konische Mantelteil 4 übergeht, es ist 8 der Kragen am verjüngten Ende 5 des konischen Mantelteils 4 und 9 der Behälterboden, der an der Außenseite des Kragens 8 befestigt ist. 10 ist die Behälterstandfläche, 11 ist die Behältermittellängsachse und 12 der Behälterdeckel.

In Figur 2 haben die Ziffern 1 bis 12 dieselbe Bedeutung wie in Figur 1. Die Ziffer 13 bedeutet eine zweite umfängliche Kante am Behältermantel 2 im Bereich des konischen Teils 4 desselben nahe seinem verjüngten Ende 5. 14 ist die Zone geringerer Konizität des konischen Mantelteils und 15 die Zone größerer Konizität desselben.

**Patentansprüche**

1. Dosenartiger, oben offener Behälter mit planem Boden, bei dem der Behältermantel aus sich in Wärme geschrumpftem Zustand befindlicher thermoplastischer Kunststoffolie ein oberes Teil, dessen Querschnittsfläche über die gesamte Länge des Teils gleichbleibende Form und Abmessung besitzt, sowie ein unteres konisches Teil mit verjüngtem Ende bildet, bei dem der Mantel eine mantelumfängliche Kante besitzt, im Bereich derer die beiden Teile des Behältermantels aneinandergrenzen, und bei dem am verjüngten Ende des konischen Mantelteils ein umlaufender, nach innen ragender planer Kragen angeordnet ist, dadurch gekennzeichnet, daß an der Außenseite des Kragens ein planer flächenhafter Werkstoffzuschnitt befestigt ist, der den Behälterboden bildet, daß die Länge des rohrförmigen Teils gering ist im Vergleich zu der Gesamtlänge des Behältermantels, damit Behälter gleicher Abmessungen unter Bildung von Behälterstapeln ineinandersteckbar sind, und daß der Mantel aus weichmacherfreier, transparenter Polyvinylchloridfolie besteht.

2. Behälter nach Anspruch 1, dadurch gekennzeichnet, daß der Durchmesser am unteren verjüngten Ende des konischen Mantelteils bis zu 25 % kleiner ist als der Durchmesser des oberen rohrförmigen Mantelteils.

3. Behälter nach Anspruch 1 und 2, dadurch gekennzeichnet, daß der Durchmesser des Behältermantels am verjüngten Ende seines unteren konischen Teils 10 % kleiner ist als der Durchmesser seines oberen rohrförmigen Teils.

4. Behälter nach Anspruch 1 bis 3, dadurch gekennzeichnet, daß sein Mantel im Bereich seines unteren konischen Teils eine zweite umfängliche Kante nahe dem verjüngten Ende desselben hat.

5. Behälter nach Anspruch 1 bis 4, dadurch gekennzeichnet, daß der Mantel kreisförmigen begrenzten Querschnitt besitzt.

6. Behälter nach Anspruch 1 bis 4, dadurch gekennzeichnet, daß der Mantel rechteckigen begrenzten Querschnitt besitzt.

7. Behälter nach Anspruch 1 bis 4 und 6, dadurch gekennzeichnet, daß der Mantel quadratischen Querschnitt besitzt.

8. Behälter nach Anspruch 1 bis 7, dadurch gekennzeichnet, daß der Mantelboden aus einem planen Zuschnitt aus Polyvinylchloridfolie besteht.

9. Behälter nach Anspruch 1 bis 8, dadurch gekennzeichnet, daß der Behälter einen seine Mündungsöffnung abdeckenden Deckel besitzt.

10. Verfahren zur Herstellung dosenartiger, oben offener Behälter der Ausbildung entsprechend Patentanspruch 1, bei dem man

i) aus einer Bahn aus biaxial streckorientierter, wärmeschrumpffähiger, thermoplastischer Kunststoffolie durch Falten derselben ein Rohr mit längsaxialer Überlappungsnaht bildet ;

ii) von diesem ein Stück vorbestimmter Länge abschneidet und es auf einen formfesten Dorn mit gerader Mittellängsachse aus einem ersten Teil, bei dem Form und Abmessung seiner Querschnittsfläche über seine gesamte Höhe gleichbleibend ist, und einem sich an dieses unmittelbar anschließenden zweiten konischen Teil, dessen verjüngtes Ende mit planer Stirnfläche dem ersten Teil abgewandt ist, wobei die Länge des ersten, in seiner Querschnittsfläche gleichbleibenden Teils klein ist im Verhältnis zur Gesamtlänge des ersten und zweiten Teils, derart aufschiebt, daß das Rohrstück, das länger als der Dorn ist, mit einem Ende über die plane Stirnfläche am verjüngten Ende des konischen Dornteils hinausragt ;

iii) das Rohrstück mit Wärme beaufschlagt und dadurch auf den Dorn aufschrumpft ;

iv) den auf die Stirnfläche des konischen Dornteils teilweise beigeschrumpften Rohrstücküberstand in noch warmformbarem Zustand an diese anpreßt ;

v) das derart gebildete Hohlkörperformteil abkühlt und vom Dorn abnimmt ;

vi) und dann an der Außenseite des Hohlkörperformteilkragens ein planer Werkstoffzuschnitt als Behälterboden befestigt wird.

11. Verfahren nach Anspruch 10, dadurch gekennzeichnet, daß der Durchmesser des konischen Dornteils an seinem verjüngten Ende bis zu 25 % kleiner ist als der Durchmesser des rohrförmigen Dornteils.

12. Verfahren nach Anspruch 10 und 11, dadurch gekennzeichnet, daß der Durchmesser des Dornteils am verjüngten Ende seines konischen Teils bis zu 10 % kleiner ist als der Durchmesser seines rohrförmigen Teils.

13. Verfahren nach Anspruch 10 bis 12, dadurch gekennzeichnet, daß der konische Teil des Dorns zwei Zonen jeweils unterschiedlicher Konizität umfaßt, wobei die Zone mit der geringeren Konizität an das Dornteil mit gleichbleibendem Querschnitt angrenzt.

14. Verfahren nach Anspruch 10 bis 13, dadurch gekennzeichnet, daß die das Rohrstück bildende Folie weichmacherfrei ist, aus PVC besteht und derart biaxial streckorientiert ist, daß sich bei ihrer Erwärmung auf eine Temperatur im Bereich von 130 bis 140 °C ihre Breite bis zu 40 %, bezogen auf ihre Ausgangsbreite, verringert und zugleich ihre Länge um 1 bis 5 %, bezogen auf ihre Ausgangslänge, in Maschinenrichtung verkürzt.

## Claims

1. Box-like, open-top container with flat bottom, in which the container wall of thermoplastic sheet in heat-shrunk state forms an upper part, the cross-sectional area of which has uniform shape and dimension over the entire length of the part, and a lower conical part with tapered end, in which the wall has a wall-circumferential edge, in the region of which the two parts of the container wall are adjacent, and in which there is arranged at the tapered end of the conical wall part an encircling, inwardly projecting flat collar, characterized in that there is fastened on the outside of the collar a flat sheet-like material blank, which forms the container bottom, in that the length of the tubular part is small in comparison with the overall length of the container wall in order that containers of the same dimensions can be inserted one in the other, forming stacks of containers, and in that the wall consists of unplasticized, transparent polyvinyl chloride sheet.

2. Container according to Claim 1, characterized in that the diameter at the lower tapered end of the conical wall part is up to 25 % smaller than the diameter of the upper tubular wall part.

3. Container according to Claims 1 and 2, characterized in that the diameter of the container wall at the tapered end of its lower conical part is 10 % smaller than the diameter of its upper tubular part.

4. Container according to Claims 1 to 3, characterized in that its wall has in the region of its lower conical part a second circumferential edge close to the tapered end of the same.

5. Container according to Claims 1 to 4, characterized in that the wall has circular limited cross-section.

6. Container according to Claims 1 to 4, characterized in that the wall has rectangular limited cross-section.

7. Container according to Claims 1 to 4 and 6, characterized in that the wall has square cross-section.

8. Container according to Claims 1 to 7, characterized in that the wall bottom consists of a flat blank of polyvinyl chloride sheet.

9. Container according to Claims 1 to 8, characterized in that the container has a lid covering over its mouth opening.

10. Method for making box-like, open-top containers of the design according to Patent Claim 1, in which

i) a tube with longitudinally axial overlap seam is formed from a web of biaxially stretch-oriented heat-shrinkable thermoplastic sheet by folding ;

ii) from this, a piece of predetermined length is cut off and pushed onto a dimensionally stable mandrel with straight central longitudinal axis of a first part, in which shape and dimension of its cross-sectional area is uniform over its entire height, and a second conical part, which directly adjoins the first part and the tapered end of which, with flat end face, faces away from the first part, the length of the first part, uniform in its cross-sectional area, being small in relation to the overall length of the first part and of the second part, in such a way that the tube piece, which is longer than the mandrel, protrudes with one end beyond the flat end face at the tapered end of the conical mandrel part ;

iii) the tube piece is subjected to heat and thereby shrunk onto the mandrel ;

iv) the tube piece overhang partially shrunk at the same time onto the end face of the conical mandrel part is pressed against the latter in still thermoformable state ;

v) the hollow moulding thus formed is cooled and removed from the mandrel ;

vi) and then a flat material blank is fastened on the outside of the hollow moulding collar as container bottom.

11. Method according to Claim 10, characterized in that the diameter of the conical mandrel part at its tapered end is up to 25 % smaller than the diameter of the tubular mandrel part.

12. Method according to Claims 10 and 11, characterized in that the diameter of the mandrel part at the tapered end of its conical part is up to 10 % smaller than the diameter of its tubular part.

13. Method according to Claims 10 to 12, characterized in that the conical part of the mandrel comprises two zones of different conicity in each case, the zone of the smaller conicity adjoining the mandrel part with uniform cross-section.

14. Method according to Claims 10 to 13, characterized in that the sheet forming the tube piece is unplasticized, consists of PVC and is biaxially stretch-oriented in such a way that, during its heating to a temperature in the range from 130 to 140 °C, its width is reduced by up to 40 %, referred to its initial width, and at the same time its length is shortened by 1 to 5 %, referred to its initial length, in machine direction.

## Revendications

1. Récipient en forme de boîte, ouvert vers le haut et présentant un fond plat, dans lequel l'enveloppe du récipient en une feuille de matière synthétique thermoplastique, qui se trouve à l'état rétracté à la chaleur, forme une partie supérieure, dont la surface en section transversale présente des dimensions et une forme constantes sur toute la longueur de la partie, ainsi qu'une partie conique inférieure à extrémité amincie, dans lequel l'enveloppe comporte une arête périphérique, dans la zone de laquelle les deux parties de l'enveloppe du récipient sont contiguës, et dans lequel un rebord plan périphérique, faisant saillie vers l'intérieur, est disposé à l'extrémité amincie de la partie conique de l'enveloppe, caractérisé en ce qu'un flan de matériau plan, de forme aplatie, qui forme le fond du récipient, est fixé sur la face externe du rebord, en ce que la longueur de la partie tubulaire est faible en comparaison de la longueur totale de l'enveloppe du récipient, afin que des récipients de mêmes dimensions soient emmanchables les uns dans les autres avec formation de piles de récipients, et en ce que l'enveloppe est constituée d'une feuille de chlorure de polyvinyle transparente, exempte d'agents plastifiants.

2. Récipient suivant la revendication 1, caractérisé en ce que le diamètre à l'extrémité inférieure, amincie, de la partie conique de l'enveloppe est jusqu'à 25 % plus petit que le diamètre de la partie tubulaire supérieure de l'enveloppe.

3. Récipient suivant les revendications 1 et 2, caractérisé en ce que le diamètre de l'enveloppe du récipient à l'extrémité amincie de sa partie conique inférieure est de 10 % plus petit que le diamètre de sa partie tubulaire supérieure.

4. Récipient suivant les revendications 1 à 3, caractérisé en ce que son enveloppe comporte, dans la région de sa partie conique inférieure, une deuxième arête périphérique à proximité de l'extrémité amincie.

5. Récipient suivant les revendications 1 à 4, caractérisé en ce que l'enveloppe possède une section transversale délimitée en forme de cercle.

6. Récipient suivant les revendications 1 à 4, caractérisé en ce que l'enveloppe possède une section transversale délimitée en forme de rectangle.

7. Récipient suivant les revendications 1 à 4 et 6, caractérisé en ce que l'enveloppe présente une section transversale carrée.

8. Récipient suivant les revendications 1 à 7, caractérisé en ce que le fond est constitué d'un flan plan en une feuille de chlorure de polyvinyle.

9. Récipient suivant les revendications 1 à 8, caractérisé en ce que le récipient présente un couvercle recouvrant son ouverture d'embouchure.

10. Procédé de préparation d'un récipient en forme de boîte, ouvert vers le haut, dont la conformation correspond à la revendication 1, dans lequel

i) à partir d'une bande de feuille en matière synthétique thermoplastique, orientée biaxialement par étirage et rétractable à la chaleur, on forme par pliage de celle-ci un tube présentant un joint de recouvrement dans l'axe longitudinal,

ii) on découpe dans ce dernier un morceau de longueur prédéterminée et on le glisse sur un mandrin de forme fixe qui présente un axe longitudinal central rectiligne et qui est constitué d'une première partie, dans laquelle les dimensions et la forme de sa surface en section transversale sont constantes sur toute sa hauteur, et d'une deuxième partie conique qui est directement rattachée à cette première partie et dont l'extrémité amincie présentant une face frontale plane est tournée à l'opposé de la première partie, la longueur de la première partie, qui présente une surface en section transversale constante, étant petite par rapport à la longueur totale de la première et de la deuxième partie, de telle façon que le morceau de tube, qui est plus long que le mandrin, fasse saillie à une extrémité au-delà de la face frontale plane de l'extrémité amincie de la partie conique du mandrin,

iii) on sollicite le morceau de tube par de la chaleur et on l'amène ainsi à se contracter sur le mandrin,

iv) à l'état encore déformable à chaud, on presse sur la face frontale de la partie conique du mandrin la projection du morceau de tube qui est partiellement contractée sur celle-ci,

v) on refroidit la pièce façonnée en corps creux, formée de cette manière, et on l'ôte du mandrin,

vi) et ensuite un flan de matériau plan est fixé, comme fond de récipient, sur la face externe du rebord de la pièce façonnée en corps creux.

11. Procédé suivant la revendication 10, caractérisé en ce que le diamètre de la partie conique du mandrin est, à son extrémité amincie, jusqu'à 25 % plus petit que le diamètre de la partie tubulaire du mandrin.

12. Procédé suivant les revendications 10 et 11, caractérisé en ce que le diamètre de la partie du mandrin à l'extrémité amincie de sa partie conique est jusqu'à 10 % plus petit que le diamètre de sa partie tubulaire.

13. Procédé suivant les revendications 10 à 12, caractérisé en ce que la partie conique du mandrin comporte deux zones présentant chacune une conicité différente, la zone ayant la conicité la plus petite étant contiguë à la partie du mandrin qui présente une section transversale constante.

14. Procédé suivant les revendications 10 à 13, caractérisé en ce que la feuille formant le morceau de tube est exempte d'agents plastifiants, est constituée de CPV et est orientée biaxialement par étirage de façon que, lors de son chauffage à une température de l'ordre de 130 à 140 °C, sa largeur se réduise jusqu'à 40 % par rapport à sa largeur de départ et que simultanément sa longueur se raccourcisse de 1 à 5 % dans le sens machine, par rapport à sa longueur de départ.

Fig. 1

Fig. 2